# EUROPEAN PATENT APPLICATION

(11) **EP 3 112 790 A1**
(43) Date of publication of application: **04.01.2017**
(21) Application number: 14883584.6
(22) Date of filing: 28.02.2014
(51) Int. Cl.: F28D 21/00, E02D 27/32, E04B 1/76, F28D 15/02, F28D 20/00, G21C 15/18, G21D 1/00

(54) **HEAT EXCHANGING STRUCTURE FOR POWER GENERATING EQUIPMENT**

(71) Applicant: The Chugoku Electric Power Co., Inc., Hiroshima-shi, Hiroshima 730-8701 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP)
(74) Representative: Osha Liang
(86) International application number: PCT/JP2014/055134
(87) International publication number: WO 2015/129041

(57) **Abstract**

A heat exchange structure of a power generation facility including a piping system that is embedded in a reinforced concrete underground structure that is integrally formed with the power generation facility, and a heat medium that is fluid and is stored in the piping system, the piping system being configured to circulate the heat medium used for heat exchange in the power generation facility.

## Description

### [Technical Field]

The present invention relates to a heat exchange structure of an electric power generation facility.

### [Background Art]

Electric power generation facilities such as, for example, a tower type solar thermal power station mounted with numerous vertically multi-staged solar receivers generate electricity by heating using the heat concentrated at the solar receivers to boil the water and generate steam to thereby allow the use of created pressurized gas for rotating the generator. The pressurized gas that was used to drive the generator is cooled at the heat exchanger and thereafter circulated to be reheated. Groundwater drawn through a vertically drilled geothermal cooling pipe within the facility site is used at the heat exchanger for cooling the pressurized gas (see for example PTL 1.)

### [Citation List]

### [Patent Literature]

[PTL 1] Japanese Laid-open Application No. 2013-24045

### [Summary of Invention]

### [Technical Problem]

For example, thermal and nuclear power plants being electric power generation facilities adopt power generating systems that generate steam with a considerable amount of heat to drive the steam turbine. Therefore, at times of emergency shutdowns in the event of equipment malfunction, disasters and the like, steam supply to the steam turbine is cut off to quickly stop such as the steam generator rotating at high-speed, and hereby heat generation at the boiler, the gas turbine, the reactor vessel and the like are also quickly stopped. The heat generated before the shutdown and the heat generated by spontaneous decay cannot be consumed by the steam turbine that exchanges the heat into electric power thereby requiring the heat to be cooled by an external coolant.

However, when a vertically drilled geothermal cooling pipe is provided to the power generation facility that is located above the ground such as in the above mentioned tower type solar thermal power station, this creates an issue that the power generation facility may not be cooled due to a damage that had occurred to the geothermal cooling pipe and the joint between the geothermal cooling pipe and the power generation facility in the case of a relative displacement created between the ground and the power generation facility caused by, for example, an earthquake or the like.

The present invention has been made in view of the above circumstances and an objective thereof is to provide at a power generation facility a heat exchange structure which is resistant to damage even in disasters which could cause a tremendous damage.

### [Solution to Problem]

A main aspect of the present invention for achieving the above objective is a heat exchange structure of a power generation facility including a piping system that is embedded in a reinforced concrete underground structure that is integrally formed with the power generation facility and a heat medium that is fluid and is stored in the piping system, the piping system being configured to circulate the heat medium used for heat exchange in the power generation facility.

According to the heat exchange structure of a power generation facility in the present invention, the piping system used for circulating the heat medium, the piping system being embedded inside the underground structure of the reinforced concrete structure that is integrally formed with the power generation facility, allows heat exchange using the potential heat retained by the earth outside the underground structure. In other words, the thermal energy of the geothermal heat exchanges heat with the earth through the reinforced concrete underground structure. And hereby, the thermal energy can be used to cool, heat, retain heat and the like for the power generation facility. Further, since the underground structure in which the piping system is installed is integrally constructed with the power generation facility, force would act similarly against the underground structure and the power generation facility so that the piping system is not likely to be damaged even when, for example, an earthquake or the like should occur. Therefore, a heat exchange structure of a power generation facility whose heat exchanging equipment that is resistant to damaged can be provided.

In the aforementioned heat exchange structure of a power generation facility, it is preferable that the piping system are laid with rebars that are to be embedded in the underground structure, before placing concrete in an excavated space made by excavating a ground when constructing the underground structure.

According to the heat exchange structure of a power generation facility in the present invention, piping system and rebars are laid inside the excavated space made by first excavating the earth and then placing concrete when constructing the underground structure so that work required merely for embedding the piping system can be greatly reduced. Additionally, when steel piping system is embedded, they can replace the rebars that bear the tensile strength of the concrete foundation.

In the aforementioned heat exchange structure of a power generation facility, it is preferable that the power generation facility is a thermal power plant, the heat medium that is circulated in the piping system is a coolant, and equipment of the thermal power plant is cooled using the underground structure serving as a cold source and a heat exchanger.

According to the present heat exchange structure of a power generation facility, cooling water used to cool the auxiliary cooling water is cooled by using the underground structure of a thermal power plant that serves as the cold source and the heat exchanger, and hereby cooling water required at an emergency shutdown can be secured.

The aforementioned heat exchange structure of a power generation facility may be a nuclear power plant, the heat medium that is circulated in the piping system is a coolant, and a nuclear reactor facility of the nuclear power plant is cooled using the underground structure serving as a cold source and a heat exchanger.

According to the present heat exchange structure of a power generation facility, facilities such as the nuclear reactor can be cooled using the underground structure of a nuclear power plant serving as the cold source and the heat exchanger.

The aforementioned heat exchange structure of a power generation facility is characterized that the heat medium is circulated while adding from outside another heat medium.

According to the present heat exchange structure of a power generation facility, the thermal capacity of the above mentioned underground structure can be substantially increased by adding from outside an additional heat medium.

In the aforementioned heat exchange structure of a power generation facility, it is preferable that the piping system includes an outer tube that is formed integral with the underground structure and an inner tube that is inserted in the outer tube and has the heat medium communicate therethrough, and a relative displacement between the outer tube and the inner tube that is created by a temperature difference between the outer tube and the inner tube is absorbed.

According to the present heat exchange structure of a power generation facility, temperature difference is created between the heat medium circulating through the piping system and the concrete forming the underground structure so that an expansion difference due to the temperature difference is created between the piping system and the concrete even when the piping system is made of steel. In this case, the piping system includes an outer tube integrally formed with the underground structure and an inner tube which is inserted in the outer tube and through which the heat medium flows so to thereby allow the relative displacement created by the temperature difference between the outer the inner tubes to be absorbed. For such reason, load is not applied to the piping system and the concrete. And therefore, a heat exchange structure of a power generation facility whose piping system and concrete is resistant to damage can be realized.

In the aforementioned heat exchange structure of a power generation facility, it is preferable that an end part of the outer tube and an outer circumferential part of the inner tube are sealed.

According to the present heat exchange structure of a power generation facility, the end part of the outer tube and the outer circumferential part of the inner tube are sealed to prevent the placed concrete from entering into the space between the outer tube and the inner tube. For such reason, the outer tube and the inner tube can be smoothly moved relative to each other. Further, the sealing can be applied relatively easily.

In the aforementioned heat exchange structure of a power generation facility, it is preferable that the underground structure includes a heat pipe that is set to extend through the concrete and into the earth.

According to the present heat exchange structure of a power generation facility, the underground structure has heat pipes that are placed to extend through the concrete and into the earth enabling heat exchange between the concrete and the earth through the heat pipe. For such reason, the thermal capacity retained in the steel reinforced concrete underground structure can be increased.

In the aforementioned heat exchange structure of a power generation facility, it is preferable that the underground structure is a foundation of the power generation facility.

According to the present heat exchange structure of a power generation facility, the power generation facility has, for example, the foundation of the power plant constructed in a larger scale retaining rigidity and strength. And for such reason, the use of a foundation having larger heat capacity and being integrally constructed with the power generation facility enables to realize a heat exchange structure for a power generation facility that is easy to construct and has a large heat capacity.

In the aforementioned heat exchange structure of a power generation facility, it is preferable that the piping system is formed integral with the underground structure and is provided to a wall face of a reinforced concrete building where the power generation facility is provided, and a steel plate is exposed to an outside on an outer perimeter of a wall where the piping system is provided.

According to the present heat exchange structure of a power generation facility, a steel plate is exposed outside, on the outer perimeter wall face of the reinforced concrete building of the power generation facility, on an outer perimeter side of where the piping system is provided. And such allows the heat medium that circulates through the piping system to be cooled by cooling from outside the steel plate by such as spraying water. Hereby, the thermal capacity retained in the underground structure can be substantially increased in an easy manner.

### [Advantageous Effects of Invention]

According to the present invention, there can be provided a heat exchange structure of a power generation facility whose heat exchanging equipment is resistant to damage, even in disasters that would cause a tremendous destruction.

### [Brief Description of the Drawings]

[Fig. 1]

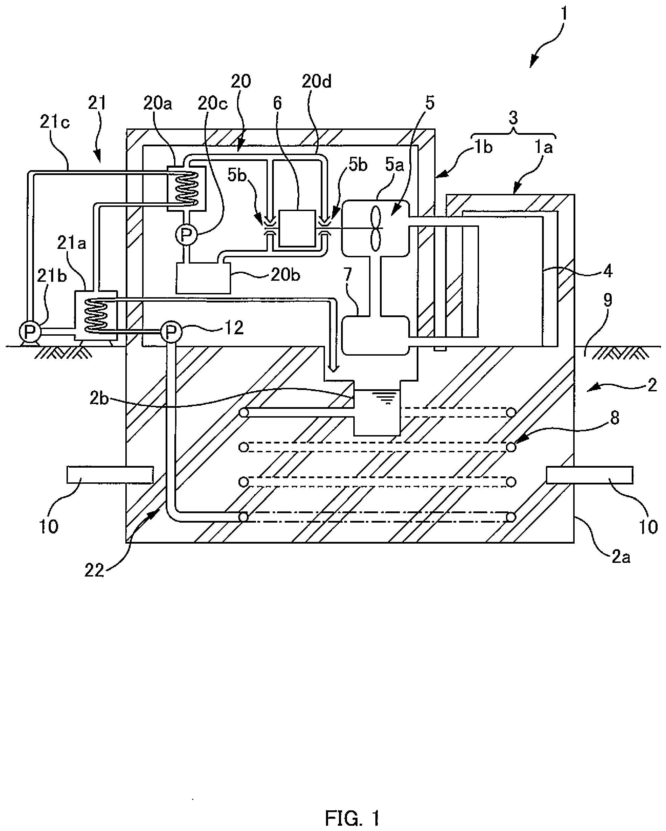

   Fig. 1 is a model diagram illustrating a thermal power plant constructed on a foundation.
[Fig. 2]

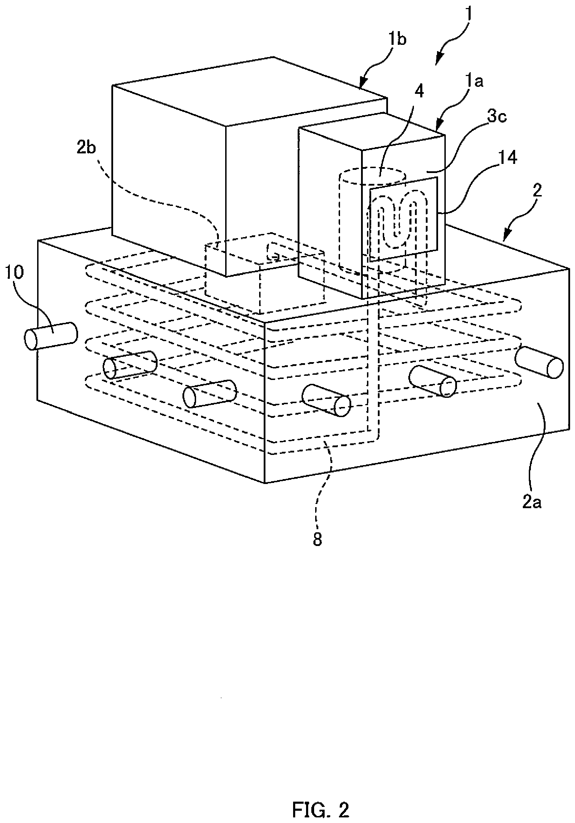

   Fig. 2 is a model diagram illustrating a cooling water piping system embedded in the foundation and the building.
[Fig. 3]

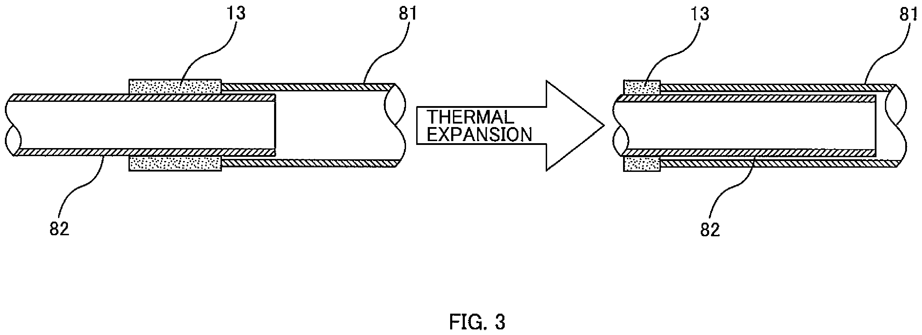

   Fig. 3 is a sectional diagram illustrating a cooling water piping system embedded in the foundation.
[Fig. 4]

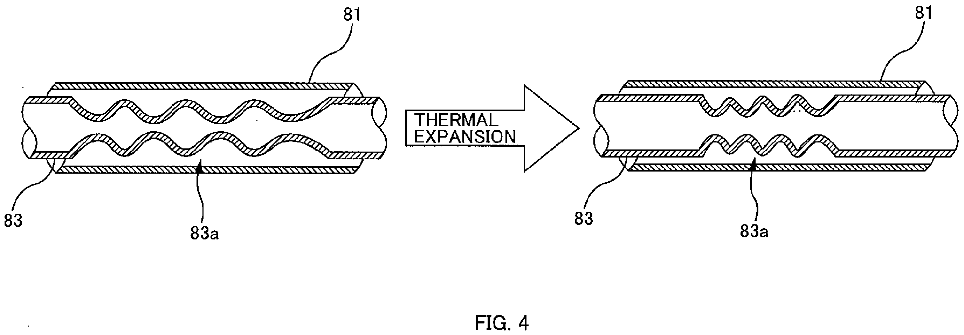

   Fig. 4 is a sectional diagram illustrating a modified example of a cooling water piping system embedded in the foundation.

### [Description of Embodiments]

The following describes an embodiment of the present invention taking an example of a heat exchange structure of a thermal power plant as the heat exchange structure of a power generation facility. Fig. 1 is a model diagram illustrating a thermal power plant constructed on a foundation. Fig. 2 is a model diagram illustrating a cooling water piping system embedded in the foundation and the building. In Fig. 2, only the boiler 4 is illustrated as the steam generator and the other parts are omitted.

The thermal power plant 1 as the power generation facility of the present embodiment is constructed on the foundation 2 and includes a boiler building 3a in which the boiler 4 is housed and a steam turbine building 3b in which the steam turbine 5 and the auxiliaries and the like being ancillary equipment of the steam turbine 5 are housed, as shown in Fig. 1. The foundation 2, the boiler building 3a and the steam turbine building 3b are all reinforced concrete structures.

The heat exchange structure of the thermal power plant 1 in the present embodiment is used to cool the cooling water, the shaft cooling water, for the boiler 4 and the auxiliaries being the ancillary equipment of the steam turbine 5. In the present embodiment, description is given with the "steam turbine bearing oil cooler" as an example of the auxiliaries to be cooled.

During an emergency shutdown of the steam turbine 5, the steam turbine 5 runs idle by inertial force acting even after the operation of the emergency shutdown and would not stop for a few hours thereby requiring bearing oil to be supplied. The temperatures of the steam turbine 5 and the steam turbine casing 5a become high to heat and deform the Babbit metal of the steam turbine bearing 5b. For such reason, the bearing oil needs to be cooled to a predetermined temperature. In such circumstances, the thermal power plant 1 of the present embodiment includes a steam turbine bearing oil cooler 20a and a shaft cooling water cooler 21a. The steam turbine bearing oil cooler 20a is for cooling the bearing oil to be supplied to the steam turbine bearing 5b and the shaft cooling water cooler 21a is for cooling the bearing oil that is circulated in the steam turbine bearing oil cooler 20a. The heat exchange structure in the present embodiment is provided to cool the shaft cooling water that is circulated in the shaft cooling water cooler 21a.

The thermal power plant 1 of the present embodiment includes a boiler 4, a steam turbine casing 5a, a generator 6, a condenser 7 and a bearing oil supplier 20. The boiler 4 is placed inside the boiler building 3a. The steam turbine casing 5a is connected to the boiler 4 which is placed inside the boiler building 3a, and has a steam turbine 5. The generator 6 is set to the shaft of the steam turbine 5 which extends out from the steam turbine casing 5a. The condenser 7 is for returning the cooled steam to the boiler 4. And the bearing oil supply section 20 supplies bearing oil to the steam turbine bearing 5b that supports the shaft of the steam turbine 5.

Additionally, this thermal power plant 1 includes a bearing oil cooling section 21 and a shaft cooling water cooling section 22. The bearing oil cooling section 21 is for cooling the bearing oil circulating in the bearing oil supply section 20, and the shaft cooling water cooling section 22 is for cooling the shaft cooling water circulating in the bearing oil cooling section 21. In other words, the heat exchange structure of the present embodiment is used as the shaft cooling water cooling section 22.

The bearing oil supply section 20 includes an oil supply pipe 20d and a steam turbine bearing oil cooler 20a. The oil supply pipe 20d is provided such that the bearing oil sent out from the steam turbine bearing oil tank 20b using the steam turbine bearing oil pump 20c is supplied to the steam turbine bearing 5b and thereafter returned to the steam turbine bearing oil tank 20b. And the steam turbine bearing oil cooler 20a equipped to the bearing oil cooling section 21 is interposed between the steam turbine bearing oil pump 20c and the steam turbine bearing 5b.

The steam turbine bearing oil cooler 20a forms a chamber which is in communication with the oil supply pipe 20d and has bearing oil temporarily stored therein. This chamber has running therethrough a helically curved part of the shaft cooling water supply pipe 21c of the bearing oil cooling section 21, and the shaft cooling water sent out from the shaft cooling water pump 21b is configured to flow through the helically curved part to return to the shaft cooling water cooler 21a. Hereby, the bearing oil sent out using the steam turbine bearing oil pump 20c is cooled when flowing through the steam turbine bearing oil cooler 20a, and the cooled bearing oil being supplied to the steam turbine bearing 5b allows the steam turbine bearing 5b to be cooled.

The bearing oil cooling section 21 is provided with a shaft cooling water supply pipe 21c such that the shaft cooling water sent out, using the shaft cooling water pump 21b, from the shaft cooling water cooler 21a passes through the steam turbine bearing oil cooler 20a and then returned to the shaft cooling water cooler 21a. The shaft cooling water cooler 21a has therein a helically curved part of the cooling water piping system 8 connecting from the shaft cooling water cooling section 22 so that the shaft cooling water inside the shaft cooling water cooler 21a is cooled with the cooling water flowing through the cooling water piping system 8.

The shaft cooling water cooling section 22 is provided with a piping system that is configured such that the cooling water, stored inside the cooling water pit 2b formed in the steam turbine building 3b with a part of the foundation 2 partially recessed downward, is sent out, using the cooling water pump 12 disposed in the steam turbine building 3b, to flow through the shaft cooling water cooler 21a and thereafter return to the cooling water pit 2b.

The foundation 2 is constructed with sufficient strength and rigidity so that the buildings 3 of the thermal power plant 1 are not damaged by earthquakes and the like. For such reason, the foundation 2 is formed sufficiently large. Further, the foundation 2 includes a plurality of heat pipes 10 that extend out toward into the earth 9 from the perimeter faces 2a of the foundation 2.

The cooling water piping system 8 is arranged in advance together with the rebars (not shown) in the ground that had been excavated a few meters for constructing the foundation 2. The foundation 2 is constructed by laying the rebars and the cooling water piping system 8, and placing concrete thereafter. Further during construction, a plurality of heat pipes 10 are also arranged to extend through the concrete forming the foundation 2 and out into the earth 9 at positions on the outer perimeter face 2a of the foundation 2 that is to be set in the earth 9.

The cooling water piping system 8 are curved and embedded inside the huge foundation 2 in order to increase the area thereof that contacts the concrete, as shown in Figs. 1 and 2. To be specific, the cooling water piping system 8 communicates with the cooling water pit 2b, and is helically routed inside the foundation 2 forming a rectangular form when seen in a planar view and further inclined so to gradually descend.

The cooling water piping system 8 that is helically routed to reach the bottom end side of the foundation 2, is then made to stand upward inside the foundation 2 and thereafter routed so to reach the shaft cooling water cooler 21a through the cooling water pump 12. In other words, the present heat exchange structure is a heat exchange structure that forces water to circulate through the closed circulation path using the cooling water pump 12. And the heat medium, that is, the pure water as the coolant is configured to circulate inside the cooling water piping system 8 that is routed from the cooling water pit 2b and through the foundation 2, and thereafter made to flow into the shaft cooling water cooler 21a using the cooling water pump 12, when cooling the steam turbine bearing 5b. Although not shown, the shaft cooling water cooler normally is in communication with another system which supplies sea water as the cooling water.

Fig. 3 is a sectional diagram illustrating a cooling water piping system embedded in the foundation. Fig. 4 is a sectional diagram illustrating a modified example of a cooling water piping system embedded in the foundation.

As illustrated in Fig. 3, the cooling water piping system 8 embedded in the foundation 2 includes an outer tube 81 and an inner tube 82. The outer tube 81 is directly embedded in the foundation 2 to be constructed integral with the concrete. The inner tube 82 is inserted in the outer tube 81 and has pure water communicating through an inner part that is provided in a manner relatively movable with respect to the outer tube 81. The end part of the outer tube 81 and the outer circumferential face of the inner tube 82 are sealed with a caulking material 13. With such configuration, the inner tube 82 whose temperature changes with the pure water circulating therethrough, can expand and contract, according to the changing temperature, with respect to the outer tube 81 that is constructed integral with the concrete having the temperature thereof approximately the same as that of the concrete. The cooling water piping system 8 may be configured to include a bellow section 83a such that the inner tube 83 is made extendable, as illustrated in Fig. 4.

As illustrated in Fig. 2, the cooling water piping system 8 is provided curved inside the externally exposed wall 3c of the reinforced concrete boiler building 3a and the steam turbine building 3b which are constructed integral with the foundation 2. And a steel plate 14 is exposed outside on the outer perimeter of the wall where the curved cooling water piping system 8 is provided.

The present heat exchange structure of the thermal power plant 1 usually has pure water stored in the cooling water pit 2b and the cooling water piping system 8 so that the pure water inside the cooling water piping system 8 is also maintained at a geothermal temperature since the foundation 2 that is provided in the earth 9 is maintained at a geothermal temperature. The steam turbine 5 is driven by the steam vaporized with the boiler 4 so that electric power is generated with the generator 6 that is connected to the steam turbine 5, in the above state.

In the case of, for example, an emergency shutdown of the steam turbine 5, the steam turbine 5 runs idle by inertial force acting even after an operation of the emergency shutdown and would not stop for a few hours thereby requiring bearing oil to be supplied to the steam turbine bearing 5b during the emergency shutdown. During such, the shaft cooling water cooling section 22 is operated together with the bearing oil supply section 20 and the bearing oil cooling section 21. The cooling water pump 12 is driven to circulate the pure water to flow from the cooling water pit 2b, through the cooling water piping system 8 and to pour into the shaft cooling water cooler 21a. The shaft cooling water cooled at the shaft cooling water cooler 21a in turn cools the bearing oil at the steam turbine bearing oil cooler 20a. Further, this cooled bearing oil is supplied to the steam turbine bearing 5b to hereby cool the steam turbine bearing 5b. In other words, the temperature of the earth in which the foundation 2 is constructed is sufficiently lower than that of the pure water in the cooling water piping system 8. For such reason, heat exchange is efficiently performed with the cooling water piping system 8 to exchange heat with the foundation 2 cooled by the earth. The foundation 2 of the thermal power plant 1 has a particularly large volume so to have a large heat capacity, and this allows a further efficient heat exchange to take place.

The pure water sent to the shaft cooling water cooler 21a, after exchanging heat by cooling the shaft cooling water, is stored in the cooling water pit 2b. Thereafter, the pure water is cooled by circulating through the cooling water piping system 8 that is routed in the foundation 2 therewhile exchanging heat with the foundation 2. And then the cooling water is resent to the shaft cooling water cooler 21a.

The foundation 2 that was heated with the heat from the cooling water piping system 8 is also cooled by the cold earth on the outer side of the foundation 2. Here, the use of the heat pipes 10 provided at the outer perimeter parts of the foundation 2 allows efficient cooling and a large amount of heat capacity to be retained. The amount of heat held by the earth is smaller than the amount of heat held by the pure water circulating through the cooling water piping system 8 and thus is cold.

The heat exchange structure of the present thermal power plant 1 has embedded therein the cooling water piping system 8 for circulating the pure water through the reinforced concrete structure foundation 2 of the thermal power plant 1 and therefore, heat exchange can be performed using the cold earth on the outer side of the foundation 2. In other words, heat energy of the cold earth being exchanged with the reinforced concrete structure foundation 2 allows the foundation 2 of the thermal power plant 1 to be used as a cold source equipped heat exchanger for cooling the shaft cooling water. And hereby, a safe emergency shutdown can be performed so that damages to the major equipment can be prevented.

The foundation 2 which has the cooling water piping system 8 placed is formed in a large scale retaining rigidity and strength since it is the foundation 2 of the thermal power plant 1. And hereby the foundation 2 having a large heat capacity and being constructed integral with the thermal power plant 1, is configured to be used as a heat exchanger. And hereby a heat exchange structure of a thermal power plant 1 that is easy to construct and that is provided with a large heat capacity can be achieved.

This heat exchange structure further being complete between the building 3 where the boiler 4 is provided and the foundation 2 constructed integral with the building 3 would allow the foundation 2 to be displaced integral with the thermal power plant 1 even when, for example, a large earthquake occurs so that the cooling water piping system 8 is unlikely to be damaged. In this way, a heat exchange equipment of the thermal power plant 1 can provide a heat exchange structure that is resistant to damage.

The foundation 2 is constructed by repeatedly laying, in the excavated space that has been made by a great amount of excavation of the ground, the cooling water piping system 8 and the rebars and placing concrete thereafter forming stacked layers in the excavated ground 9. Therefore, work for just embedding the cooling water piping system 8 does not take place. For such reason, man-hours required for arranging the cooling water piping system 8 can be greatly reduced. In other words, complicated work such as for embedding the cooling water piping system 8 in the constructed foundation 2 is not required so that a heat exchange structure can be realized more easily. And if steel piping system is embedded as the cooling water piping system 8 in this work, such can be in place of the rebars that bear the tensile strength of the concrete foundation.

Further in the present embodiment, the heat exchange structure adopts a technique of forcing pure water to circulate using the cooling water pump 12. Therefore, the placement of a head pipe without keeping the cooling water pit opened to the air allows pressure to be applied to the pure water that circulates. Therefore, even when the pure water is hot exceeding the boiling temperature, i.e., 100 degrees Celsius, under atmospheric pressure, the pure water can be used as a coolant remaining in a liquid state without changing into water vapor that has a small heat capacity per unit volume. In this way, a further efficient heat exchange structure can be realized.

The amount of expansion and contraction due to temperature difference between the cooling water piping system 8 and concrete would differ even when the cooling water piping system 8 is made of steel since a temperature difference is created between the concrete forming the foundation 2 and the pure water circulating in the cooling water piping system 8, forming the heat exchange structure. Here, the cooling water piping system 8 includes an outer tube 81 that is formed integral with the foundation 2 and an inner tube 82 that is inserted in the outer tube 81 and has pure water flowing therethrough. The cooling water piping system 8 is configured to absorb the relative displacement between the outer tube 81 and the inner tube 82 created by a temperature difference so that no load will be applied to the cooling water piping system 8 and the concrete. In this way, a heat exchange structure of a thermal power plant 1 where the cooling water piping system 8 and the concrete is resistant to damage can be realized.

Further, a configuration where the end part of the outer tube 81 and the outer circumferential part of the inner tube 82 are sealed with a caulking material 13 has been adopted so that concrete that had been placed would not enter into the gap between the outer tube 81 and the inner tube 82. Hereby, construction is made easy and the outer tube 81 and the inner tube 82 can be relatively moved in a smooth manner.

The heat exchange structure of the thermal power plant 1 of the present embodiment has the foundation 2 include heat pipes 10 that are placed to extend through the concrete and into the earth 9 so that heat can be exchanged between the concrete and the earth 9 through the heat pipes 10. Hereby, the reinforced concrete foundation 2 can retain a larger amount of heat capacity.

Further, the cooling water piping system 8 is constructed integral with the foundation 2 and is curved when set to the wall 3c of the reinforced concrete building 3 in which the steam turbine 5 and the boiler 4 are contained. Additionally, a steel plate 14 is exposed outside on the outer perimeter of the wall where the curved cooling water piping system 8 is provided. With this configuration, the pure water circulating inside the cooling water piping system 8 can be cooled by cooling the steel plate 14 from outside. Hereby, the heat capacity of pure water can be increased easily.

The aforementioned embodiment described a heat exchange structure that forces pure water to circulate using the pump 12. However, another external heat medium may be employed. For example, a heat exchange structure that directly adds into the cooling water pit 2b from outside and circulates industrial water, water for fire-fighting, sea water or the like will do. In this case, the heat capacity of the foundation 2 can be increased by adding an additional heat medium from outside. Therefore, efficient cooling can be conducted when a fast cooling is desired such as in the case of an emergency shutdown or when a long term continuous cooling is desired.

The aforementioned embodiment described a heat exchange structure for cooling the shaft cooling water where the power generation facility was a thermal power plant 1. However, for example, a heat exchange structure that has, for example, piping system embedded in the foundation of a nuclear power plant to cool the nuclear reactor, the pressure vessel and/or the containment building with the pure water circulating through the piping system, will do. For example, there may be assumed a case where the cooling takes place after a scram, and in this case 6.4 TJ of thermal capacity is expected to be deprived from the nuclear reactor and the like while the temperature of the cooling water in the foundation and the cooling water piping system rises from 15 to 90 degrees Celsius.

The estimation results are as follows.
Estimated cooling capacity in nuclear power plant (1380 MW class)
Specific heat of concrete: 1.89 MJ/m³°C (reference: soil/stone 1.05 MJ/m³°C)
Dimension of concrete foundation: 79 m x 88 m x 6.5 m Diameter of laid piping system in foundation: set to 65 A Piping system length and number: 88 m x 39 + 79 m x 43 (laid in 2 m intervals)
Water quantity in piping system: 22.6 m³
Heat capacity of foundation concrete and water quantity in piping system when temperature rises from 15 °C to 90 °C: = (45188 - 22.6) m³ x (90 °C - 15 °C) x 1.89 MJ/m³°C + 22.6 m³ x (90°C - 15°C) x 4.19 MJ/m³°C = 6.4 TJ

Further, although the aforementioned embodiment described an example where the bearing oil and the shaft cooling water were cooled to cool the steam turbine bearing 5b during the emergency shutdown of the steam turbine 5, there is no limitation thereto. For example, the bearing and the exiting air of the instrumentation air system of the power plant, major equipment such as the reactor vessel and the like may be cooled during an emergency. Further, the heat exchange structure may be permanently used as the heat exchange structure of a cooling facility and the like for an electronic control device room and the like of a power generation facility including wind farms, hydraulic power plants and the like.

Furthermore, although the above described embodiment was described to use pure water as the heat medium, there is no limitation thereto. Medium such as oil and the like having high thermal capacity and being in an appropriate temperature range can be selected and used taking into consideration the flowability thereof.

The above described embodiments are simply for facilitating the understanding of the present invention and are not in any way to be construed as limiting the present invention. The present invention may variously be changed or altered without departing from its spirit and encompass equivalents thereof.

### [Reference Signs List]

1 thermal power plant 2 foundation 2a perimeter faces of foundation 2b cooling water pit 3 building 3a boiler building 3b steam turbine building 3c wall of building 4 boiler 5 steam turbine 5a steam turbine casing 6 generator 7 condenser, 8 cooling water piping system, 9 earth, 10 heat pipes,12 cooling water pump, 13 caulking material, 14 steel plate, 20 bearing oil supply section, 20a steam turbine bearing oil cooler, 20b steam turbine bearing oil tank, 20c steam turbine bearing oil pump, 20d oil supply pipe, 21 bearing oil cooling section, 21a shaft cooling water cooler, 21b shaft cooling water pump, 21c shaft cooling water supply pipe, 22 shaft cooling water cooling section, 81 outer tube, 82 inner tube, 83 inner tube, 83a extendable section

## Claims

1. A heat exchange structure of a power generation facility, comprising:
a piping system that is embedded in a reinforced concrete underground structure that is integrally formed with the power generation facility; and
a heat medium that is fluid and is stored in the piping system,
the piping system being configured to circulate the heat medium used for heat exchange in the power generation facility.

2. A heat exchange structure of a power generation facility according to claim 1, wherein
the piping system are laid with rebars that are to be embedded in the underground structure, before placing concrete in an excavated space made by excavating a ground when constructing the underground structure.

3. A heat exchange structure of a power generation facility according to claim 1 or 2, wherein
the power generation facility is a thermal power plant, the heat medium that is circulated in the piping system is a coolant, and
equipment of the thermal power plant is cooled using the underground structure serving as a cold source and a heat exchanger.

4. A heat exchange structure of a power generation facility according to claim 1 or 2, wherein
the power generation facility is a nuclear power plant,
the heat medium that is circulated in the piping system is a coolant, and
a nuclear reactor facility of the nuclear power plant is cooled using the underground structure serving as a cold source and a heat exchanger.

5. A heat exchange structure of a power generation facility according to any one of claims 1 to 4, wherein
the heat medium is circulated while adding from outside another heat medium.

6. A heat exchange structure of a power generation facility according to any one of claims 1 to 5, wherein
the piping system includes an outer tube that is formed integral with the underground structure and an inner tube that is inserted in the outer tube and has the heat medium communicate therethrough, and
a relative displacement between the outer tube and the inner tube that is created by a temperature difference between the outer tube and the inner tube is absorbed.

7. A heat exchange structure of a power generation facility according to claim 6, wherein
an end part of the outer tube and an outer circumferential part of the inner tube are sealed.

8. A heat exchange structure of a power generation facility according to any one of claims 1 to 7, wherein
the underground structure includes a heat pipe that is set to extend through the concrete and into the earth.

9. A heat exchange structure of a power generation facility according to any one of claims 1 to 8, wherein
the underground structure is a foundation of the power generation facility.

10. A heat exchange structure of a power generation facility according to any one of claims 1 to 9, wherein
the piping system is formed integral with the underground structure and is provided to a wall face of a reinforced concrete building where the power generation facility is provided, and
a steel plate is exposed to an outside on an outer perimeter of a wall where the piping system is provided.
